# EUROPEAN PATENT SPECIFICATION

(11) **EP 2 781 070 B1**
(45) Date of publication and mention of the grant of the patent: **20.06.2018**
(21) Application number: 12733108.0
(22) Date of filing: 05.07.2012
(51) Int. Cl.: H04L 29/06, H04L 29/08, H04N 21/234, H04N 21/24, H04N 21/262, H04N 21/414, H04N 21/44, H04N 21/442, H04N 21/443, H04N 21/61, H04N 21/6373, H04N 21/6543, H04N 21/845

(54) **MEDIA STREAMING IN MOBILE NETWORKS WITH IMPROVED EFFICIENCY**
MEDIA-STREAMING IN MOBILEN NETZWERKEN MIT VERBESSERTER EFFIZIENZ
LECTURE EN CONTINU MULTIMÉDIA DANS DES RÉSEAUX MOBILES AVEC UNE EFFICACITÉ AMÉLIORÉE

(30) Priority: 14.11.2011 US 201161559406 P
(43) Date of publication of application: 24.09.2014
(73) Proprietor: Telefonaktiebolaget LM Ericsson (publ), 164 83 Stockholm (SE)
(72) Inventor: WILLARS, Per, S-185 94 Vaxholm (SE); FRÖJDH, Per, S-11343 Stockholm (SE); KARLSEN, Johnny, S-177 71 Järfälla (SE); LOHMAR, Thorsten, S-52074 Aachen (SE)
(74) Representative: Ericsson
(86) International application number: PCT/EP2012/063119
(87) International publication number: WO 2013/072080

(56) References cited:
- WO-A1-2013/000489
- Ericsson, ST-Ericsson: "Impact of video streaming traffic on LTE", , vol. RAN WG2, no. Athens, Greece; 20110822 16 August 2011 (2011-08-16), XP002685563, 3GPP Draft; R2-114313 Impact of video streaming traffic on LTE Retrieved from the Internet: URL:http://www.3gpp.org/ftp/tsg_ran/WG2_RL 2/TSGR2_75/Docs/R2-114313.zip [retrieved on 2012-10-17]
- JASON RIDENOUR ET AL: "Low-Power Buffer Management for Streaming Data", IEEE TRANSACTIONS ON CIRCUITS AND SYSTEMS FOR VIDEO TECHNOLOGY, IEEE SERVICE CENTER, PISCATAWAY, NJ, US, vol. 17, no. 2, 1 February 2007 (2007-02-01), pages 143-157, XP011161872, ISSN: 1051-8215
- ADAMS J ET AL: "Adaptive-Buffer Power Save Mechanism for Mobile Multimedia Streaming", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 4548-4553, XP031126384, ISBN: 978-1-4244-0353-0
- CAI L ET AL: "Energy Management Using Buffer Memory for Streaming Data", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 24, no. 2, 1 February 2005 (2005-02-01), pages 141-152, XP011125591, ISSN: 0278-0070, DOI: 10.1109/TCAD.2004.837724

## Description

### Technical field

The invention relates to media streaming techniques in telecommunication networks, using adaptive media rate and/or non-adaptive media rate.

### Background

There is an increased interest in HTTP streaming of media, in particular video. This has evolved beyond simple progressive download to give two new features: bit-rate adaptation and live content. The way this is achieved is that the content is partitioned into multiple segments, or files, each corresponding to a small time-interval of content, for example 5 or 10 seconds. A client device is provided with a manifest file (also known as a Media Presentation Description, MPD) which lists the different segments and where to fetch them and the client fetches them one by one. Alternative representations of the content (e.g. different bit-rates or qualities) can be provided in different segments so that a client can adapt the bit-rate dynamically by choosing one of several alternative segments for each time interval. The segments are typically formatted as MPEG-2 transport streams or MP4 files (including 3GP files and other file formats based on the ISO base media file format). The split into different segments/files that are fetched via a standard web protocol like HTTP is also said to be cache-friendly, or CDN (Content Distribution Network) friendly, since it does not require any state in the server or cache, in contrast to streaming servers based on protocols like RTSP.

3GPP has standardized a solution for HTTP streaming called Adaptive HTTP Streaming (AHS) in Release 9 of PSS. The Motion Picture Experts Group (MPEG) has extended AHS to a new standard called Dynamic Adaptive Streaming over HTTP (DASH) which is currently finalized and also being used as a basis for the Release 10 version of HTTP streaming in 3GPP called 3GP-DASH 10. Other (non-standardized) solutions for HTTP streaming include HTTP Live Streaming by Apple and Smooth Streaming by Microsoft. Mobile broadband radio networks typically employ a state machine in the radio interface. A higher radio state is used to provide a high throughput channel to the mobile device, but staying in that state also costs resources in the radio network (e.g. associated control signaling) as well as in the battery of the device. Therefore, it is more efficient to transmit a given data volume with as high speed as possible, and then switch down to a lower radio state to save network resources and battery. Due to the delay and cost of switching radio state, this only makes sense if the idle period is long enough, so that a substantial time can be spend in the lower radio state before switching up again.

Typically, down-switching of radio state is triggered by detecting an idle period of data traffic with an inactivity timer. Other mechanisms can however also be used.

Video for Smart phones require media bitrates between 200kbps (low quality for iPhones) and 600kbps (low quality for iPads). Shared bearers such as HSPA and LTE can offer peak bitrates of 6Mbps and more.

In order to save battery and use system resources efficiently, the radio channel offers a number of states. In a 3G WCDMA network, the highest state corresponds to Cell_DCH/HSPA. The Cell-DCH radio state allows the highest peak-bitrates, but requires also high system resources and drains the mobile phone battery the most. The Cell-FACH radio state requires less system resources any battery, but also does allow for moderate bitrates. Typically, the radio network moves the radio channel into a "lower" state after a certain bearer idle period (meaning no data transmitted). Most operators use a timeout in the order of 2 seconds. When the radio channel is idle for another period, e.g. 10 seconds, the radio network moves the radio channel state to URA-PCH, which is more battery efficient, but requires up-switching to a higher state in order to transmit/receive data. There is also a device-initiated procedure to down-switch state from Cell-DCH or Cell-FACH directly down to Idle or URA-PCH, which is commonly referred to as "Fast dormancy". The timer is typically in the order of 2-5 seconds. The timers described can vary between networks based on operator configuration, and between devices based on device vendor's configurations. There may also be networks and devices with other algorithms to down switch state, not only using a static timer.

In an LTE network, the highest state corresponds to the Active sub-state of Connected mode. Down switch to the idle mode state is typically initiated after an inactivity timer expires. There are also battery-saving states within the Connected mode state (called DRX sub states).

Adaptive HTTP streaming is becoming the dominant content streaming technique. A number of different techniques exist such as Apple's HTTP Live Streaming (HLS), Microsoft Smooth-streaming (ISM) and 3GP / MPEG DASH. Those adaptive HTTP streaming technique have common principles: The client receives the content stream as a sequence of files, which are locally merged into a continuous media stream. The URLs of the file sequence are described in the manifest file, which is an .m3u8 playlist in case of HLS, an .ismc in case of Microsoft ISM and an .MPD in case of DASH.

The client fetches one media segment (file) after each other as described in the manifest. During file download, the client measures the available link bit-rate (download speed). Depending on the different between available link bit-rate and needed bit-rate for the media, the client selects an according quality representation (slightly lower than the measured link bit-rate).

The continuous media stream is segmented into media segments (files) on the server side. These media segments are fetched by the client one-by-one as independent files. The client merges the media segments of possibly different quality levels into a continuous stream again.

In adaptive bit-rate streaming, a number of representations are defined in the manifest file. These may correspond to different media bitrates. The client is typically tasked to estimate what media bit rate can be delivered safely, and then request a corresponding representations. If the available throughput decreases, a down-switch of media rate is needed. If the available throughput increases, an up-switch of media rate can be done to maximize the end-user experience.

Prior art documents are the 3GPP draft R2-114313 "Impact of video streaming traffic on LTE", the IEEE publication "Low-Power Buffer Management for Streaming Data" by Jason Ridenour et al and the IEEE publication "Adaptive-Buffer Power Save Mechanism for Mobile Multimedia Streaming" by Janet Adams et al. A problem with current media streaming technologies (both adaptive and non-adaptive) is that they do not account for the radio state machine described above, and do not provide a desired traffic pattern. Consequently, there is a chance that data is transmitted with no or short idle periods between bursts, where either no down switch of radio states is triggered, or an up switch is triggered too soon after a down switch.

### Summary of the invention

It is an object to the invention to improve the telecommunication networks of the state of the art. The present invention is defined by the subject matter of the independent claims. According to a first aspect, there is provided a mobile telecommunication device comprising:
- a receiver for receiving content data via a mobile telecommunication network;
- a play-out buffer for holding downloaded but yet un-played content data;
- a media reader for reading content data at a media rate from the play-out buffer and for sending content to a display or speaker for rendering;
- a segment request controller for sending requests for new content segments to a remote server;
- a buffer fill monitor for checking a fill level of the play-out buffer.

The segment request controller is configured to switch between a state of continuously requesting content segments and a state of not requesting any content segments depending on the fill level. The segment request controller may switch to the state of continuously requesting new content segments when the fill level is below a minimum fill value, and switches to the state of not requesting any content segments when the play-out buffer fill level is above a maximum fill value. By switching to a state of not requesting further segments, the chance increases that relatively long idle periods in the communication between the network node and the device are created. During these relatively long idle periods, the communication can be switch down to a lower radio state, so as to save battery in the mobile device.

In an embodiment the minimum fill level and the maximum fill level are locally configured in the mobile telecommunication device or received from a remote server via the mobile telecommunication network.
In a further embodiment, the device is configured for adaptive media streaming and further comprises:
- a throughput estimator for estimating a current throughput;
- a media rate selector for selecting, out of a plurality of possible media rates, a requested media rate for a next requested media segment,
- a memory for storing a manifest data file comprising information on the possible media rates.
In yet another embodiment the buffer fill monitor is configured to use a predefined low start value for the maximum value at the start of the download session, and then increase the maximum value during the media download session, based on at least one of: a content type, viewing or listening statistics collected for a specific media clip, user ratings of a media clip, a length of a media clip, user context or inferred mood of the user, and charging.
In an embodiment, the media rate selector is configured to calculate a ratio p between the current throughput and the requested media rate, and instruct the segments request controller to request a media rate higher than a predefined breakpoint media rate level only if the ratio p is above a predefined ratio ρₜₕ, where ρₜₕ > 1. The ratio ρₜₕ may be a constant or it may be a function of the requested media rate.

According to a further aspect a network node for a telecommunication network, comprises:
- a manifest file modifier configured to modify a manifest file so as to force a mobile device to request a relatively large segment;
- a client request parsing module configured to receive a request for a media segment from the device;
- a segment formatter and retriever configured to retrieve original media segments from a remote server or a local storage, and reformat the media segments into a larger segment; and
- a content data delivery function configured to transfer the larger segment to the mobile device.
The network node according may further comprise:
- a memory for storing a manifest data file comprising information on possible media rates;
- a media rate decider configured to calculate a ratio p between the current throughput and the requested media rate, and instruct the segment retriever to request a media rate higher than a predefined breakpoint media rate level only if the ratio p is above a predefined ratio ρₜₕ, where ρₜₕ > 1;
- an unsuccessful response function for sending a rejection response to the mobile communication device if the requested media rate was not accepted.

According to a further aspect a method of operating a mobile communication device is provided, the method comprising:
- receiving content data via a mobile telecommunication network;
- holding in a play-out buffer downloaded but yet un-played content data;
- reading content data at a media rate from the play-out buffer and sending content to a display or speaker for rendering;
- checking a fill level of the play-out buffer, continuously or at least at the end of a media segment download, and
- switching between a state of continuously requesting new content segments and a state of not requesting any segments.

According to a further aspect, a method of operating a network node in a telecommunication network, the method comprising:
- delivering a manifest file to a mobile device, the manifest file being modified to present larger media segments than in original format;
- receiving a request for a media segment from the mobile telecommunication device;
- retrieving original media segments from a remote server or a local storage (71);
- reformatting the media segments into a larger segment;
- transferring the larger media segment to the mobile device.

### Brief description of the drawings

Fig. 1 schematically shows a network architecture in which the embodiments of the invention can be implemented;
Fig. 2A schematically shows an implementation of a client according to an embodiment of the invention;
Fig. 2B schematically shows an implementation of a network node configured to communicate with the client of Figure 2A;
Fig. 3 shows a graph of an example of a play-out buffer fill level of a mobile telecommunication device using non-adaptive media rate video streaming according to the state of the art;
Fig. 4 shows a graph of an example of a play-out buffer fill level of a mobile telecommunication device using non-adaptive media rate video streaming according to an embodiment of the invention;
Fig. 5 is a flow chart of a method of operating a mobile communication device, according to the embodiment of Figure 2A;
Fig. 6 shows an example of the client according to an embodiment in which the client is configured to process an adaptive media rate media stream;
Fig. 7 shows a graph of an example of a play-out buffer fill level of a mobile telecommunication device using an adaptive media rate video streaming according to the state of the art;
Fig. 8 shows a graph of an example of a play-out buffer fill level of a mobile telecommunication device using an adaptive media rate video streaming according to an embodiment of the invention;
Fig. 9 schematically shows an implementation of a network node according to a further embodiment of the invention;
Fig. 10 shows a graph of an example of a play-out buffer fill level of a mobile telecommunication device using adaptive media rate video streaming using the embodiment of Figure 9;
Fig. 11 is a flow chart showing a method of operating a network node in a telecommunication network, according to an embodiment;
Fig. 12 shows an example of an up switch policy according to an embodiment;
Fig. 13 shows a network node according to an embodiment;
Fig. 14 shows a graph of an example of a play-out buffer fill level of a mobile telecommunication device using an adaptive media rate video streaming according to an embodiment of the invention.

### Detailed description of the embodiments

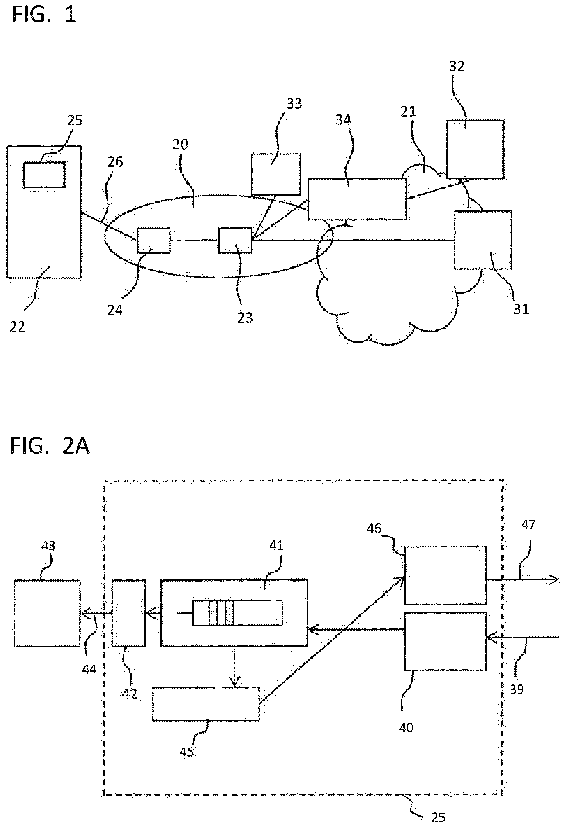

**Figure** 1 schematically shows a network architecture in which the embodiments of the invention can be implemented. The network architecture comprises a mobile network 20 connecting a client 25 to a data network 21, e.g. the Internet. A mobile communication device 22 is shown which communicates with the mobile network 20 by means of wireless communication. In this example the mobile network 20 comprises a core network 23 in communication with a radio access network (RAN) 24. The mobile device 22 is configured to communicate via a radio connection 26 to the RAN 24. The mobile device 22 is configured to execute the client 25 which may at least partly, be a software program stored in a memory of a processor (not shown). The client 25 is responsible for the play-out of the video or other content. The client 25 may execute on the device 22 itself, or may execute on yet another device (not shown) which is connected via the first device 22 using e.g. Bluetooth, a local WiFi hotspot ("tethering") or a cable. Figure 1 also shows a first origin server 31 and a second origin server 32 which both are connected to the data network 21. A third origin server 33 is shown which is connected to the core network 23. Furthermore, a proxy or edge server 324 is shown which connects the second origin server 32 to the core network 23.

The client 25 may fetch video content from a server, using the mobile network 20 (RAN 24 and core network 23) as a communication channel. There are different alternatives for to which server the client 25 will connect. The client 25 may be connected to the first origin server 31 on the Internet 21, or any other server on the Internet hosting the video content, from which the client fetches the content. Alternatively, the client 25 fetches video content from the proxy server 34 connected to second origin server 32. The proxy server 34 functions as an intermediate server between the original content providers server (i.e. server 32) and the client 25. This intermediate server can be a proxy with various degree of video functionality, or it can be an Edge server of a Content Distribution Network, actually caching the content to be served. The proxy or edge server may be located within the mobile network, or on the Internet. As a further alternative, the client 25 may fetch video content from the third origin server 33 within the mobile network 20. This is typical for operator provided video services.

Note that Figure 1 considers also a "local break-out" in RAN, where a PDN gateway to terminate all mobility management functions is located in RAN. In that case, the origin server 33 or the proxy/edge server 34 will appear as RAN nodes.

Video, or other streaming media content, is delivered to the client 25 in the form of segments that correspond to a specific time-interval of the original video content. In some cases, such a segment may represent a predefined amount of playback time, typically in the order of 2-10 seconds. In other cases, the segment can represent a variable amount of playback time. In order to minimize real-time delay, shorter segments are preferred for live content, whereas for on-demand content longer segments can also be used. In general one can say that the shorter the segment, the quicker the client 25 can adapt bit rate. However, advanced clients and/or clients using advanced protocols (such as DASH) can also choose to download partial segments by using byte-range requests of segments. This way an advanced client can also switch between bitrates at time points that do not correspond to segment boundaries.

**Figure 2A** schematically shows an implementation of the client 25 according to a first embodiment of the invention. In this embodiment, the client 25 is configured to download and process media with a non-adaptive (i.e. fixed) media rate. The client 25 comprises a receiver 40 for receiving content from a server, see arrow 39. The client 25 further comprises a play-out buffer 41 configured for holding downloaded but yet un-played content data. A media reader 42 is configured to read data at a media rate (also referred to as *play-out rate)* from the play-out buffer 41 and to send content to a display (video) or a speaker (audio) 43 for rendering, see arrow 44. The play-out buffer 41 is filled up with a buffer fill rate, which is either zero (idle period) or the throughput (link bit rate) available for the device 22. A buffer fill monitor 45 checks a fill level of the play-out buffer 41 continuously or at least at the end of a segment download, and provides input to a segment request controller 46. The segment request controller 46 formats a request message for the selected media representation of the next segment, and sends the request to a remote server, see arrow 47. In the embodiment of Figure 2A, the segment request controller 46 of the client 25 is configured to switch between a state of continuously requesting new content segments and a state of not requesting any content segments depending on the buffer fill level. In an embodiment, the segment request controller 46 switches to the state of continuously requesting new segments when the buffer fill level is below a minimum fill value, and switches to the state of not requesting new content segments when the play-out buffer fill level is above a maximum fill value. The minimum fill level and the maximum fill level may be locally configured in the mobile telecommunication device 22 or may be received from a remote server via the mobile telecommunication network 20. The buffer fill levels may be defined in terms of seconds of media stream.

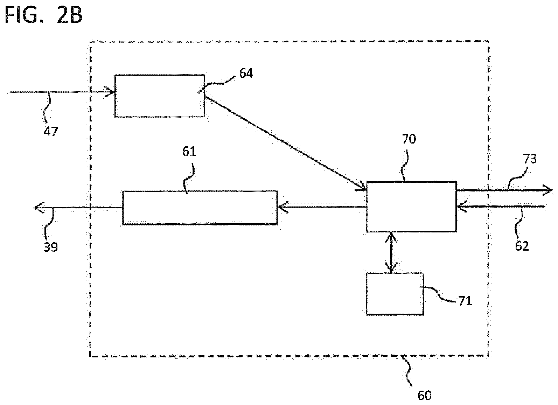

**Figure 2B** shows a server 60 which is configured to communicate with the client 25 shown in Figure 2B. The server 60 may be any of the following: an origin server, a proxy or edge server, on the Internet 21, or within the mobile network 20, see Figure 1. The server 60 comprises a content data delivery function 61 for delivering the content to the client 25, typically using HTTP/TCP, see arrow 39. The server 60 further comprises a client request parsing module 64 configured to receive requests from the client, see arrow 47. The server 60 also comprises a segment retriever and formatter 70, also referred to as segment retriever 70, which is invoked by the client request parsing module 64. The segment retriever and formatter 70 sends requests to an upstream server (ultimately the origin server), if being a proxy or edge server without the content in a cache, see arrow 73. It then receives the content from the server, see arrow 62. The server 60 may also comprise a local storage 71 configured to store the actual media content in case the server 60 itself is an origin server, or a proxy or edge server with caching functionality.

The following method steps may be performed by the client 25:
1. receive one segment from the server 60, at highest possible data speed
2. check whether the play-out buffer 41 contains more video for playback than the maximum fill level, in terms of seconds of video content
   a. if "false": go to step 1 to retrieve another segment from the server,
   b. if "true": go to step 3,
3. playback the video from the play-out buffer 41 without downloading further segments,
4. continuously check for the play-out buffer 41 to decrease below the minimum fill level, in terms of seconds of video
   a. as long as "false": continue playback without downloading more segments of video. At some point in time, the radio system (from device or network side) will trigger down-switch to a more battery and resource saving radio state (a "lower" radio state)
   b. when "true": go to step 1 to download another set of segments.
Note that except for the initial buffering when a video clip is started, the video is continuously played back also during step 1 (in parallel to downloading a segment).

The effect of this method is a traffic pattern where periods of data activity is interleaved with long periods of data inactivity (idle periods), enabling the radio system to save battery and other resources by switching radio state. The long periods of inactivity are possible to create by downloading, at highest possible speed, enough content during the data activity period.

In step 2 preferably a request for a next segment is sent slightly before the previous segment is fully downloaded, in order to fully utilize the data capacity of the connection. This can be done on a parallel TCP connection, or on the same TCP connection using HTTP pipelining or other multiplexing protocols. It is further noted that preferably the same TCP connection is reused to avoid another slow start.

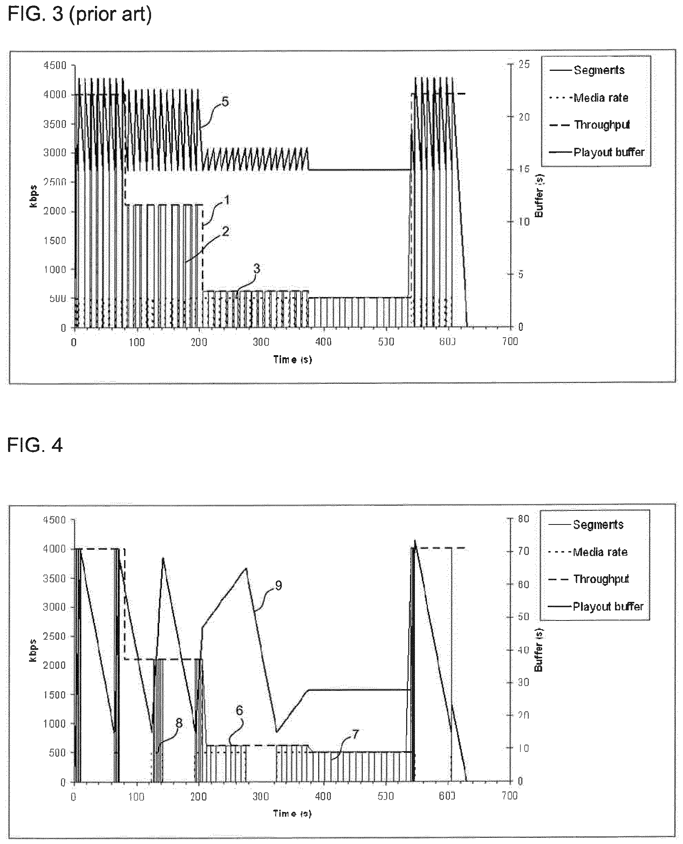

**Figure 3** shows a graph of an example of a play-out buffer fill level of a mobile telecommunication device using non-adaptive media rate video streaming according to the state of the art. In this example a dashed line 1 indicates a possible throughput as read on the left y-axis. The throughput 1 changes over time as a result of varying radio conditions for the mobile device. Please note that in reality the throughput varies more stochastically, but here it is simplified to illustrate the embodiments better. The solid lines 2 indicate the downloaded segments as a function of time. Each segment corresponds to 10 seconds of video content and is represented by a vertical rectangular box. A dashed line 3 indicates the media rate, in this case a non-adaptive rate of 500 kbps. Figure 3 also shows a buffer fill level 5 (read on the right y-axis) which increases if segments are downloaded, and decreases in periods where no segments are downloaded, the so-called idle period. In the example of Figure 3 (at t=375 sec) the throughput 1 is decreased to 500 kbps which equals the media rate. This means that the buffer is emptied as fast as it is filled, resulting in a constant play-out buffer level 5 with a value of 15 seconds. As can be seen from Figure 3, the method according to the state of the art will create no or too short idle times to move the radio channel into a low state where network resource and battery can be saved.

**Figure 4** shows a graph of an example of a play-out buffer fill level of a mobile telecommunication device using non-adaptive media rate video streaming according to the first main embodiment of the invention. In this example a dashed line 6 indicates a possible throughput. The throughput 6 changes over time in the same way as in Figure 3 so that the advantages of the embodiment will be clear to the reader. The solid lines 7 indicate the downloaded segments as a function of time. Each segment corresponds to 10 seconds of video content and is represented by a vertical rectangular box. A dashed line 8 indicates the media rate, in this case the non-adaptive rate of 500 kbps as was used in Figure 3. Figure 4 also shows a buffer fill level 9 which increases if segments are downloaded, and decreases in periods where no segments are downloaded, the so-called idle period. The buffer fill level 9 is very different from the line 5 shown in Figure 3. This is caused by the use of a minimum buffer fill level equal to 15 and a maximum buffer fill level of 65 sec. The client requests a new segment if the buffer fill level is <= 65 sec. It then downloads the full segment, which contains 10 sec of video. This means that the peaks could be between 65 and 75 sec, depending on how close to 65 sec the fill level was before downloading the last segment. The segment request controller 46 continues to request for new media segments, see Figure 2A, only if the fill level 9 is below a maximum fill value and then stop requesting new media segments until the fill level is below a minimum fill value. As a result of this method several relatively large idle periods are created, see for example between 10-65 sec, 140-190 sec. These idle periods are long enough to move the radio channel into a lower state where network resource and battery can be saved.

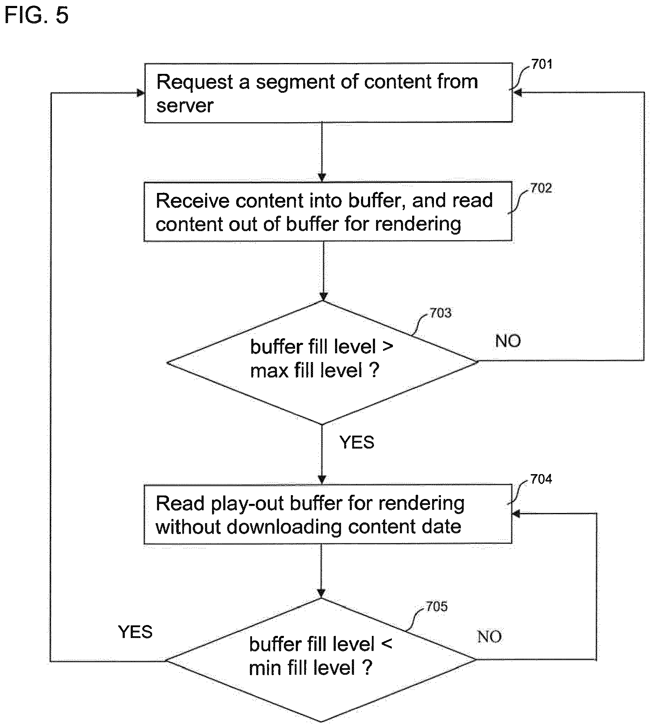

**Figure 5** is a flow chart of a method of operating a mobile communication device, according to an embodiment. The method may be performed by the client 25 shown in Figure 2A. The method starts with a step 701 in which the client 25 requests a segment of content from the server (i.e. network node 60). Next, in a step 702 the client 25 receives content via the mobile network into its play-out buffer 41, and in parallel reads the content from play-out buffer for rendering. The client 25 checks a fill level of the play-out buffer 41 in a step 703. If the play-out buffer fill level is not yet larger than a max fill value, the method returns to step 701. If the play-out level is larger than the max fill value, a step 704 follows in which the client 25 reads content from the play-out buffer for rendering (without downloading content data). Next in a test step 705 it is checked if the play-out buffer fill level is less than min fill value. If the answer is "No" then the method proceeds with the step 704. If the answer is "Yes" the method proceeds to the step 701. Here, steps 701-703 correspond to a so-called "Data activity" (or "Downloading Active" or "continuously requesting") state, and step 704-705 correspond to a so-called "Data inactivity" (or "Downloading paused") state.

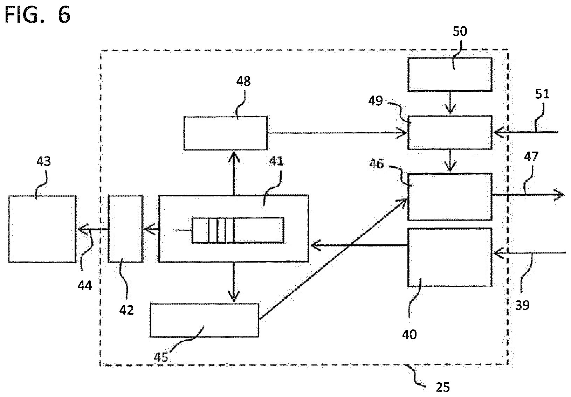

**Figure 6** shows an example of the client 25 according to a further embodiment in which the client 25 is configured to process an adaptive media rate media stream. Next to the modules already discussed with reference to Figure 2A, the client 25 further comprises a throughput estimator 48, a rate decider function 49 and a manifest file storage 50. The throughput estimator 48 is configured to estimate the current throughput (link bit rate) e.g. by measuring the download time for a segment with a given data volume. The throughput estimator 48 provides input for the rate decider function 49. The rate decider function 49 decides what media rate, or in general, representation of content, shall be requested for a next media segment. Based on the estimated throughput and a switch policy 51, received from a remote server or configured locally, it selects an appropriate media rate (representation) from the available media rates for the given content as described in the manifest file. As in the embodiment of Figure 2A, the segment request controller 46 is configured to switch between a state of continuously requesting new segments and a state of not requesting any segments depending on the buffer fill level.

The server-side companion of Figure 6 could be the one shown in Figure 2B. The server is still only serving the segments as requested from the client (even if segments could correspond to different media rates).

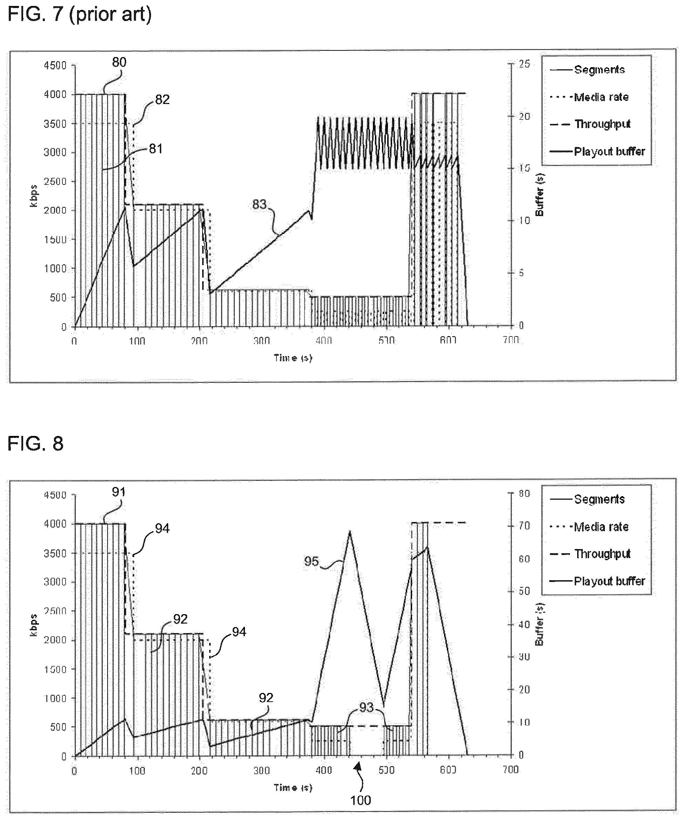

**Figure 7** shows a graph of an example of a play-out buffer fill level of a mobile telecommunication device using an adaptive media rate video streaming according to the state of the art. In this example a dashed line 80 indicates a possible throughput. The throughput 80 changes over time as a result of varying radio conditions for the mobile device. It is illustrated as stepwise changes to simplify the figure and indicate varying average throughput. The solid lines 81 indicate the downloaded segments as a function of time. Each segment corresponds to 10 seconds of video content and is represented by a vertical rectangular box. A mobile telecommunication device will, as a matter of procedure, request a media rate which is as close as possible to the available throughput (but not higher). This includes requests to up switch the media rate when the available throughput increases. The up switch request will be accepted and as a consequence, the media rate, indicated with the dashed line 82, will be near to the throughput 80. There is no limitation on the media rate selected other than that it should be less than or equal to the current throughput. This leads to a situation where, when the throughput 80 is very high, the media rate 82 is also very high, which means a continuous delivery of video content. As can be seen in Figure 8, line 82 is almost continuously close to the line 80. Figure 7 also shows a buffer fill level 83 which increases if segments are downloaded, and decreases in periods where no segments are downloaded, the so-called idle period. The media segments in the beginning of the graph are big, but at around 380 seconds, the media rate has been further reduced and is about half the available throughput. In this example it is assumed that no media rate closer to (but less than) the throughput of 500 kbps is available in the manifest file. As a consequence, each media segment is downloaded in half the time.

As can be seen from Figure 7, the method according to the state of the art will not create long enough idle times to move the radio channel into a low state where network resource and battery can be saved. Especially when a large throughput is available, this is not utilized to create battery saving idle gaps. Also, this means that the available cell capacity will always be fully allocated to video traffic, if video users are present in the cell, which can impact the performance of other (e.g. web browsing) traffic.

**Figure 8** shows a graph of an example of a play-out buffer fill level of a mobile telecommunication device using an adaptive media rate video streaming according to the second main embodiment of the invention. In this example a dashed line 91 indicates the throughput similar to line 80 in Figure 7. Line 94 indicates the adaptive media rate and lines 92 indicate the segments. Furthermore, the line 95 indicates the buffer level of the media buffer 41. As a consequence of the specific buffering behavior on the device side, the segments are downloaded continuously until the device buffer 41 is full, exceeding the maximum fill level of 65 seconds. Once this maximum level has been reached, no additional segments are requested at that time. As a consequence a relatively long idle period of about 60 seconds is created which is indicated by reference number 100 in Figure 8. In this idle period 100, the radio network (or device) is able to move the radio channel state to a lower state in order to save battery.
For either non-adaptive or adaptive video streaming, the segments are preferably downloaded in sequence. If the segments would be downloaded in parallel, the amount of data wasted if the user aborts watching would be higher.

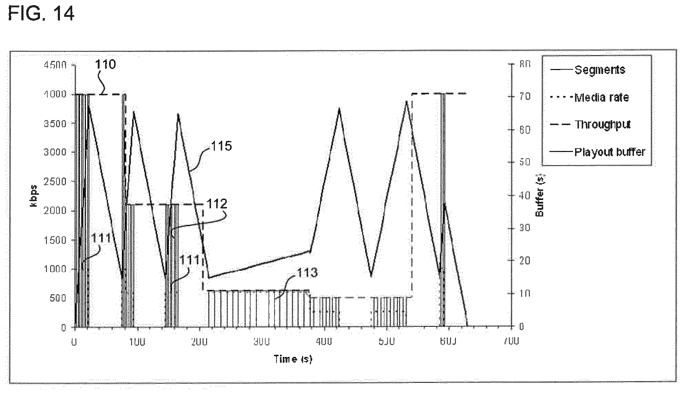

When selecting the values for the minimum and maximum buffer fill level, the following must be noted. The minimum level should be selected high enough to avoid risks of buffer under-runs if the connectivity suddenly experiences problems. The maximum fill level should be selected high enough above the minimum fill level to ensure a long enough idle period for efficient use of down-switching to a lower radio state. In the example described later on with reference to Figure 14, the idle period is 50 seconds, which allows good battery saving even if it takes 10-15 seconds for the radio network to down-switch the device. The average buffer fill level (for a long video clip) would be the average of the maximum fill level and the minimum fill level. This reflects the statistically expected wasted bytes, if a user aborts watching a video. So the maximum fill level and the minimum fill level should not be too high. Wasting of 15 - 65 seconds of video is deemed acceptable. Whereas wasting a full 8-minute video might not be acceptable.

According to a specific embodiment for either non-adaptive or adaptive rate media streaming, the maximum fill level is variable during a media download session. Initially the maximum fill level may have a conservative (fairly low) value for the first chunk or interval, and then may be increased. This is favorable in cases where the probability of the user aborting the video play-out is very high in the beginning. The maximum fill level may be increased over time based on one or more of the following information:
- the content type, e.g. for user-generated content, initial abandonment rate is high, but not for TV series,
- viewing statistics collected for a specific video clip (e.g. some clips may have so poor quality that most people stop watching after 10 seconds),
- user ratings of a video clip,
- a length of a video clip,
- user context or inferred mood of the user (e.g. user is browsing between video clips and has aborted the last 5 clips within 10 seconds, the user is detected to be in a "zapping mode"),
- charging, e.g., for free content, initial abandonment rate is high, but not for paid content.

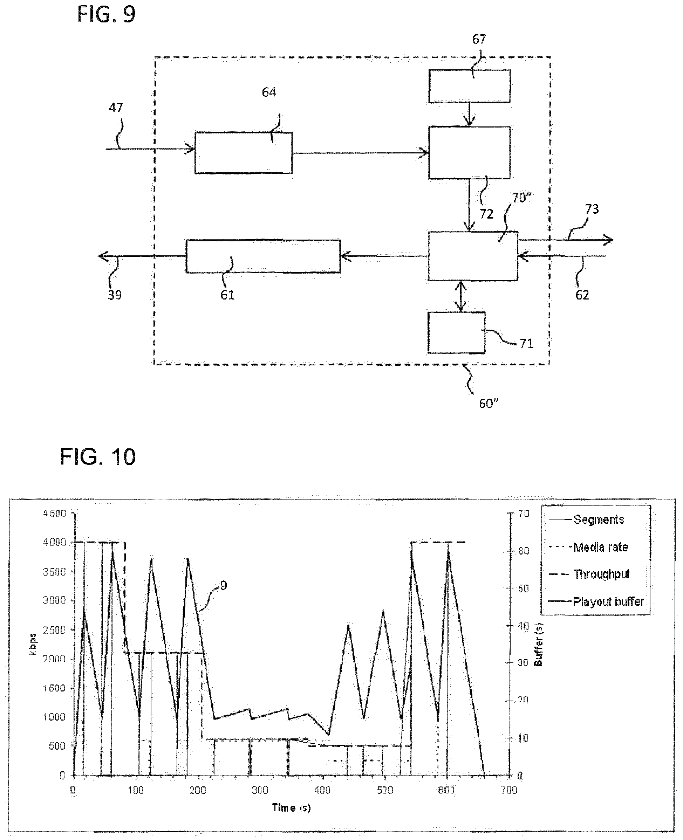

In a particular embodiment, shown in Figure 9, the network node 60"comprises a manifest file storage 67, a manifest file modifier 72, and a segment retriever and formatter 70". The segment formatter and retriever 70" is configured to modify the segments in such a way that it takes multiple original segments and creates one larger segment. Optionally, the network node 60" comprises a client capability checker (not shown) to check if the client supports the embodiment described in Figure 2A or not. If it appears that the network node is communicating to a client not supporting the embodiment of Figure 2A, the larger segments are created and sent to the client. The manifest modifier 72 is configured to modify the manifest file to present larger media segments than in original format. The network node 60" will deliver the modified manifest file to the mobile device 22, e.g. by means of the content data delivery function 61. The modified manifest file will force the device 22 to request the larger segment. The client request parsing module 64 will receive such a request for a media segment from the device 22. The network node 60"will then retrieve original media segments from a remote server or its local storage 71. Next, the segment formatter and retriever 70" will reformat the media segments into a larger segment, and then the larger media segment will be transferred to the mobile device 22. It is noted that the manifest file itself may follow the same procedure as the segments. I.e. there is a request from the client 25, and the server 60"will check if it is cached locally, if not it will we downloaded from an origin server, and modified on the fly. So the manifest file may not always be stored locally in storage 67.

As an example the server 60" may reformat a media stream from small segments e.g. 2-10 sec. into larger segments, e.g. 60 sec. The client 25 only downloads one segment at a time, and the server 60" only delivers relatively long segments, e.g. 60 sec. of media content in each segment. Simulations have shown that this will result in idle times in the communication between the server 60" and the client 25, so that the radio system is able to down switch the radio state. Figure 10 shows a graph of an example of a play-out buffer fill level of a client in communication with the server shown in Figure 9. In Figure 10, the line 9 indicates the play-out level. This again provides long enough idle gaps to ensure radio efficient down switching of radio state. There can still be adaptation of the media rate, as shown, but it will be less responsive (unless the client 25 can switch rate during media segments, which is assumed to not be the case in the figure). Please note that this server implementation could also be used in the non-adaptive media streaming.

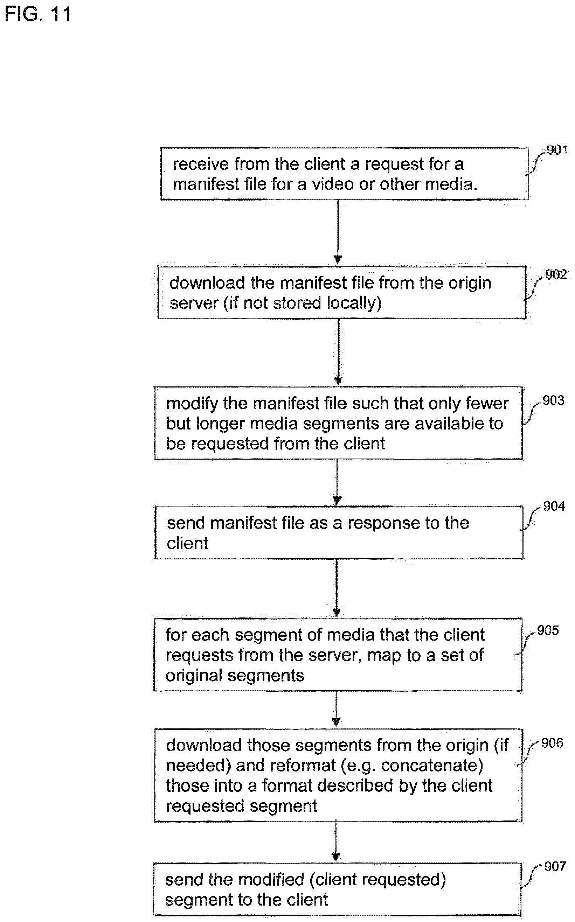

**Figure 11** is an example of a flow chart showing the method of operating the network node 60" shown in Figure 9. The methods start at a step 901 wherein the server receives from the client a request for a manifest file for a video or other media. Optionally, the server checks, if possible, whether the client is capable of requesting multiple segments. (If yes, then the server 60" can behave like a state of the art server. Otherwise proceed.) In a step 902, the server 60" downloads the manifest file from the origin server (if not stored locally). In a step 903, the server 60" modifies the manifest file such that only fewer but longer media segments are available to be requested from the client, and sends this as a response to the client, see step 904. The server 60" may also keep a mapping between the modified segment structure and the original segment structure. In a step 905, for each segment of video that the client 25 requests from the server 60", the server 60" maps to a set of original segments. The server 60" downloads those segments from the origin (if needed) and reformats (e.g. concatenate) those into a format described by the client requested segment, see step 906. In a step 907 the server sends the modified (client requested) segment to the client 25.

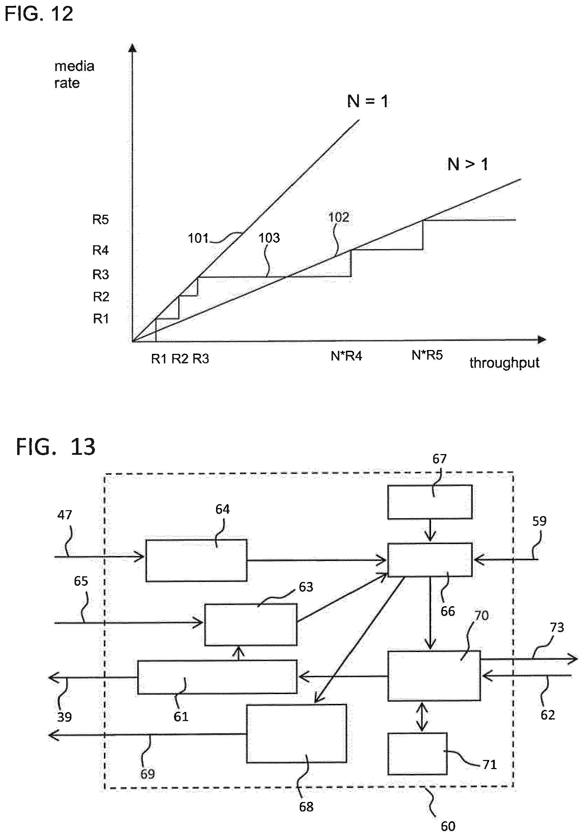

In a further embodiment the media rate selection is done according to a specific up switch policy. The policy is stored either locally or it may be downloaded dynamically from a remote server. An example of an up switch policy will be described with reference to **Figure 12****.** In Figure 12, a line 101 indicates the line where the ratio p = throughput/media_rate equals 1. A line 102 indicates the line where the ratio p equals N with N>1 and constant. A line 103 indicates the up switching of the media rate as a function of throughput. In the example of Figure 12, there are 5 possible representations with media rates R1, R2, R3, R4 and R5. In this example, R3 is the so-called 'breakpoint media rate level' above which a more conservative up switch policy is applied. The conservative policy is to allow an up switch to R4 only if the estimated throughput is at least N*R4. N could be any value above 1, but tests have shown that values between 2-4 are preferable. When using rate R4 a radio efficient traffic pattern is possible, with relatively long idle periods, wherein the ratio between staying in a high radio state and a low radio state would be approximately N, thus saving battery and radio resources. It is noted that ratio p which is used to decide for the up switching could also be a function of the requested media rate, instead of being constant.

In the embodiment described with reference to Figure 12, the client uses the breakpoint media rate level and the factor N to make more conservative up switch decisions. The remote server may provide the breakpoint media-rate level and the factor N to the client e.g. by using extra parameters in existing HTTP messages such as HTTP headers or query string parameters, or by the client sending a separate HTTP GET to retrieve those parameters. Alternatively, these parameters are stored in the client by other means, such as storage in a local memory. Please note that instead of implementing the up switch policy in the client, as was described above, it is also possible to implement the method in the server 60.

**Figure 13** shows a server 60 according to an embodiment of the invention. The server 60 is configured to communicate with a client device. The server 60 may be any of the following: an origin server, a proxy or edge server, on the Internet 21, or within the Mobile network 20. The server 60 comprises a content data delivery function 61 for delivering the content to the client, typically using HTTP/TCP, see arrow 39. A throughput estimator 63 is comprised which estimates the current throughput, with feedback from the content data delivery function 61, e.g. measuring the download time of the last media segment. Other more advanced mechanisms are possible, e.g. looking at rate of TCP ACKs. Optionally, for a server deployed in the mobile network or integrated with it, direct information from the network on available throughput, see arrow 65, can be used. The server 60 further comprises a client request parsing module 64 configured to receive requests from the client, see arrow 47. Furthermore the server comprises a rate decider 66 and a manifest file storage 67. The rate decider 66 is configured to decide which media rate (i.e. representation) or media to deliver (or not to deliver), given the client request for a media segment, the estimated throughput, the available media bit rates of the content (from the manifest file) and a received media rate switch policy, see arrow 59.
The server 60 also comprises an unsuccessful response function 68 which is invoked by the rate decider 66 if the client-requested media rate (representation) is different from the one decided by the rate decider 66 according to the switch policy.
The server 60 can send an unsuccessful response, see arrow 69, to the client 25 (such as "Resource not found", "Redirect" or "404 File not found") to trigger another request from the client 25 for a media rate that is lower. The server 60 also comprises a segment retriever and formatter 70 which is invoked by the rate decider 66 if not sending an unsuccessful response to the client. Finally, the server 60 may comprise a local storage 71 configured to store the actual media content (in case of being an origin server, or a proxy or edge server with caching functionality). According to an embodiment, the retriever and formatter 70 is configured to perform the following steps:
- Get the content from the local storage 71 (if the server is the edge server 34 with a cache filled with the content, or if it is one of the origin servers 31-33),
- Send a request to and receive the content from an upstream server (ultimately the origin server), if being a proxy or edge server without the content in a cache, see arrow 73,
- Optionally reformatting the request to request rate (representation) decided by the rate decider 66, if different from the original client request,
- Optionally, dynamically reformat the content to another media rate (representation),
- Optionally, dynamically reformat the content to a different segment length (preferably longer),
- Send the content to the content data delivery function 61.

By combining the above described restrictions for the up switch policy and the buffer fill levels, a further improvement is obtained as compared to the state of the art. This will be discussed with reference to **Figure 14****.** In Figure 14 a dashed curve 110 shows the available throughput as read on the left y-axis. It is initially high, then degrading in steps, and in the end becomes high again. A dotted curve 111 shows the media rate. In this example the three highest media rates require a throughput at least 4 times higher than the media rate to be selected. Thus, the high throughput situations are exploited by not increasing the media rate aggressively, but rather for saving network resources and battery. Thin solid lines 112, 113 indicate the download of segments of video. The solid lines 112, 113 form small bars, each bar representing one segment containing 10 seconds of video. A solid curve 115 having triangular shaped tops shows the play-out buffer fill level in terms of seconds of video, and is read on the right y-axis. In this example, 600 kbps is the breakpoint media rate that should be sustained if possible. The available media rate above the breakpoint level is 1000 kbps, and the policy for this is to require a throughput 4 times this rate (N=4). I.e. only when the throughput is at least 4000 kbps, the highest media rate is selected.

Initially the throughput 110 is high, and the video segments 112 are downloaded fast, and the play-out buffer level 115 quickly reaches above the "high threshold", which in this example is 65 seconds of video content. After that there is no traffic on the radio for a long time, while the client plays out the video. Eventually, the buffer reaches below the "low threshold" value, in this example 15 seconds, which triggers the download of another set of segments at about time t = 75 sec. As the throughput 110 decreases, the time to fill up the play-out buffer 41 above the "high threshold" increases, as does the interval between downloading of these chunks of segments. However, the idle time between the chunks of segments remains constant, long enough to allow down switching of radio state. When the throughput 110 reaches 650 kbps, i.e. nearly the same level as the current media rate 111 of 600 kbps, the buffer fill level 115 will slowly increase. At about t=380 sec, the throughput drops below 600 kbps and the media rate 111 is down switched to 256 kbps. In the end, the throughput 110 is again very high, see Figure 14, which creates an idle gap again. This idle gap is due to the filled buffer, which is due to that the throughput was about twice the media rate before that. But there is an idle gap after the data burst downloaded with very high bit-rate, since the throughput is much higher than the media rate.

As can be seen from Figure 14, the relative gain of the idle periods, and the related radio state down-switch, is proportional to the ratio between the throughput and the media rate. At a low ratio, the proposed method provides less benefit than at a high ratio.

Preferably, the segments are downloaded in sequence. If the segments would be downloaded in parallel, the amount of data wasted if the user aborts watching would be higher.

It is noted that in case the media rate streaming is done with an adaptive media rate streaming protocol, the switching between media rates (or representations) can be triggered at different moments. In some streaming protocols or implementations media rate switching happens between segments. In that case, it is preferable to limit the size of the segments. That is why it is preferable to download multiple segments to create the desired traffic pattern with a long enough idle gap. In other streaming protocols or implementations, the media rate switching can also occur during the download of a segment. In that case, it is conceivable to define very long segments and only download one at a time. An extreme case would also be to use only one or a few segments only per bit-rate alternative and download one partial segment at a time.

Please note that the device 22 can be implemented to perform only the restrictive method described with reference to Figure 12 without the dependency on the buffer fill level. In that case the buffer fill monitor 45 can be absent. The same accounts for the network node implementation of the method described with reference to Figure 12. As discussed above the method according to the described embodiments can be performed in the client or on the server side.

Server-side implementations may be performed in any server involved in delivering the content, including the origin server 31, 32, 33, the edge server 34 of the core network 20, or in a proxy or other intermediate server, or in a combination.

The policy of limiting up-switch to certain media rates can be enforced by the server in different ways. Examples are:
Removing representations from the manifest file (assuming that manifest is re-evaluated dynamically),
- Redirecting requests for representations with a too high media rate to lower rate representations using HTTP 3xx messages,
- Indicating that content is not available using HTTP 404 response, and assuming the client will then request another representation,
- Serving requests for representations with a too high media rate but with a lower rate content instead,
- Rewriting the request to refer to another representation than what the client requested (in a proxy server, edge server, or other intermediate server).

It is noted that client-side and server-side implementations can coexist. The client 25 can limit up-switches for the purpose of saving battery if needed, while the server 60 (origin server or proxy server or similar) can limit up-switches with the purpose of saving resources in the radio network (policy basis). In general the advantage is provided that is limiting video users to use up all the cells capacity for delivering highest possible bit rate. In particular, when combined with a radio-efficient traffic pattern, this allows retaining a radio and battery efficient radio traffic pattern at very high throughput levels.

The above described embodiments provide a good balance between user experience, battery and radio efficiency, for video streaming with adaptive media bit rate protocols. Although video streaming has been given as an example to explain the embodiments, the methods disclosed may however be applied to every media stream that is provided in segmented files. Examples of that are live audio files, IP-radio, special languages or subtitles streams in parallel to the video stream. From this it might be apparent that the client 25 might have more than one buffer working in parallel. In that the buffers might be multiple but the control function can be singular. This provides the possibility to synchronize parallel loading of buffers in burst mode and obtain an even better traffic pattern. The above described embodiments can be implemented for 3G WCDMA networks, but are also applicable to LTE and other radio technologies.

Those skilled in the art will also appreciate that the various features and functionalities described above may be performed by a combination of analogue and digital circuits, and/or one or more processors configured with software and/or firmware (e.g., stored in memory) that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

### Abbreviations

- AHS: Adaptive HTTP Streaming
- CDN: Content Distribution Network
- DASH: Dynamic Adaptive Streaming over HTTP
- HLS: HTTP Live Streaming
- HTTP: Hyper Text Transport Protocol
- MPEG: Moving Picture Experts Group
- MPD: Media Presentation Description

## Claims

1. A mobile telecommunication device (22) comprising:
- a receiver (40) for receiving content data via a mobile telecommunication network;
- a play-out buffer (41) for holding downloaded but yet un-played content data;
- a media reader (42) for reading content data at a media rate from the play-out buffer and for sending content to a display or speaker for rendering;
- a segment request controller (46) for sending requests for new content segments to a remote server;
- a buffer fill monitor (45) for checking a fill level of said play-out buffer;
- a throughput estimator (48) for estimating a current throughput; and
- a media rate selector (49) for selecting, out of a plurality of possible media rates, a requested media rate for a next requested media segment,
wherein the segment request controller (46) is configured to switch between a state of continuously requesting content segments and a state of not requesting any content segments depending on said fill level, and
wherein said media rate selector (49) is configured to calculate a ratio p between said current throughput and said requested media rate, and instruct said segments request controller (46) to request a media rate higher than a predefined breakpoint media rate level (R3) only if said ratio p is above a predefined ratio ρₜₕ, where ρₜₕ > 1.

2. Mobile telecommunication device (22) according to claim 1, wherein the segment request controller (46) switches to the state of continuously requesting new content segments when said fill level is below a minimum fill value, and switches to the state of not requesting any content segments when the play-out buffer fill level is above a maximum fill value.

3. Mobile telecommunication device (22) according to any of the preceding claims, wherein the minimum fill value and the maximum fill value are locally configured in the mobile telecommunication device or received from a remote server via said mobile telecommunication network.

4. Mobile telecommunication device (22) according to any of the preceding claims, wherein the device comprises:
- a memory (50) for storing a manifest data file comprising information on said possible media rates.

5. Mobile telecommunication device (22) according to any of the preceding claims, wherein
said buffer fill monitor (45) is configured to use a predefined low start value for said maximum fill value at the start of said download session, and then increase said maximum fill value during the media download session, based on at least one of:
- a content type;
- viewing or listening statistics collected for a specific media clip;
- user ratings of a media clip;
- a length of a media clip;
- user context or inferred mood of the user;
- charging.

6. Mobile telecommunication device (22) according to claim 1, wherein where the ratio ρₜₕ is a function of the requested media rate.

7. Method of operating a mobile communication device (22), said method comprising said mobile communication device performing the steps of:
- receiving content data via a mobile telecommunication network;
- holding in a play-out buffer (41) downloaded but yet un-played content data;
- reading content data at a media rate from the play-out buffer (41) and sending content to a display or speaker for rendering;
- checking a fill level of said play-out buffer (41), continuously or at least at the end of a media segment download;
- estimating a current throughput;
- selecting, out of a plurality of possible media rates, a requested media rate for a next requested media segment;
and
- switching between a state of continuously requesting new content segments and a state of not requesting any segments depending on said fill level,
wherein the step of selecting further comprises the steps of calculating a ratio p between said current throughput and said requested media rate, wherein a media rate higher than a predefined breakpoint media rate level (R3) is only selected as a requested media rate for a next requested media segment if said ratio p is above a predefined ratio ρₜₕ, where ρₜₕ > 1.

8. Network node (60) for a telecommunication network, said network node comprising:
- a manifest file modifier (72) configured to modify a manifest file so as to force a mobile device to request a relatively large segment;
- a client request parsing module (64) configured to receive a request for a media segment or a media rate from said device;
- a segment formatter and retriever (70) configured to retrieve original media segments from a remote server or a local storage (71), and reformat the media segments into a larger segment; and
- a content data delivery function (61) configured to transfer the larger segment to the mobile device,
the network node (60) further comprising:
- a throughput estimator (63) configured to estimate a current throughput, and
- a media rate decider (66) configured to calculate a ratio p between said current throughput and said requested media rate, and instruct said segment formatter and retriever (70) to request a media rate higher than a predefined breakpoint media rate level only if said ratio p is above a predefined ratio ρₜₕ, where ρₜₕ > 1.

9. Network node (60) according to claim 8, wherein said network node further comprises:
- a memory (67) for storing a manifest data file comprising information on possible media rates;
- an unsuccessful response function (68) for sending a rejection response to the mobile communication device if said requested media rate was not accepted.

10. Network node (60) according to claim 8 or 9 wherein said throughput estimator (63) estimates the current throughput based on feedback from the content data delivery function (61).

11. Network node (60) according to claim 8 or 9 wherein said throughput estimator (63) estimates the current throughput based on the download time of the last media segment or a rate of received TCP ACKs for the segments, from the content data delivery function (61).

12. Network node (60) according to claim 8 or 9 wherein said throughput estimator (63) estimates the current throughput based on received available throughput (65) of said network.

13. Method of operating a network node (60) in a telecommunication network, said method comprising said network node performing the steps of:
- delivering a manifest file to a mobile device, said manifest file being modified to present larger media segments than in original format;
- receiving a request for a media segment from said mobile device;
- retrieving, by a segment formatter and retriever (70), original media segments from a remote server or a local storage (71);
- reformatting, by the segment formatter and retriever (70), said media segments into a larger segment;
- transferring said larger media segment to the mobile device;
- estimate a current throughput; and
- calculating a ratio p between said current throughput and a requested media rate, and instruct the segment formatter and retriever (70) to request a media rate higher than a predefined breakpoint media rate level only if said ratio p is above a predefined ratio ρₜₕ, where ρₜₕ > 1.

14. Method of claim 13 where the step of calculating is based on a received media rate switching policy (59).

15. Method of claim 13 where the step of calculating is based on a available media bit rates in the manifest file.

## Patentansprüche

1. Mobile Telekommunikationsvorrichtung (22), umfassend:
- einen Empfänger (40) zum Empfangen von Inhaltsdaten über ein Mobiltelekommunikationsnetz;
- einen Abspielzwischenspeicher (41) zum Halten von heruntergeladenen, aber noch nicht gespielten Inhaltsdaten;
- ein Medienlesegerät (42) zum Lesen von Inhaltsdaten mit einer Medienrate aus dem Abspielzwischenspeicher und zum Senden von Inhalt an eine Anzeige oder einen Lautsprecher zur Wiedergabe;
- eine Segmentaufforderungssteuerung (46) zum Senden von Aufforderungen für neue Inhaltssegmente an einen Fernserver;
- ein Zwischenspeicher-Füllkontrollgerät (45) zum Überprüfen eines Füllstandes des Abspielzwischenspeichers;
- einen Durchsatzschätzer (48) zum Schätzen eines aktuellen Durchsatzes; und
- einen Medienratenwähler (49) zum Auswählen einer angeforderten Medienrate für ein nächstes angefordertes Mediensegment aus einer Vielzahl von möglichen Medienraten,
wobei die Segmentaufforderungssteuerung (46) dazu konfiguriert ist, zwischen einem Zustand des ständigen Anforderns von Inhaltssegmenten und einem Zustand des Nichtanforderns von beliebigen Inhaltssegmenten abhängig von dem Füllstand umzuschalten, und
wobei der Medienratenwähler (49) dazu konfiguriert ist, ein Verhältnis p zwischen dem aktuellen Durchsatz und der angeforderten Medienrate zu berechnen und die Segmentaufforderungssteuerung (46) anzuweisen, eine Medienrate höher als ein vordefinierter Haltemarken-Medienratenstand (R3) nur dann anzufordern, wenn das Verhältnis p über einem vordefinierten Verhältnis ρₜₕ ist, wobei ρₜₕ > 1 ist.

2. Mobile Telekommunikationsvorrichtung (22) nach Anspruch 1, wobei die Segmentaufforderungssteuerung (46) in den Zustand des ständigen Anforderns neuer Inhaltssegmente umschaltet, wenn der Füllstand unter einem minimalen Füllwert ist, und in den Zustand des Nichtanforderns von beliebigen Inhaltssegmenten umschaltet, wenn der Abspielzwischenspeicher-Füllstand über einem maximalen Füllwert ist.

3. Mobile Telekommunikationsvorrichtung (22) nach einem der vorstehenden Ansprüche, wobei der minimale Füllwert und der maximale Füllwert lokal in der mobilen Telekommunikationsvorrichtung konfiguriert sind oder über das Mobiltelekommunikationsnetz von einem Fernserver empfangen werden.

4. Mobile Telekommunikationsvorrichtung (22) nach einem der vorstehenden Ansprüche, wobei die Vorrichtung Folgendes umfasst:
- einen Speicher (50) zum Speichern einer manifesten Datendatei, die Informationen über die möglichen Medienraten umfasst.

5. Mobile Telekommunikationsvorrichtung (22) nach einem der vorstehenden Ansprüche, wobei
das Zwischenspeicher-Füllkontrollgerät (45) dazu konfiguriert ist, einen vordefinierten niedrigen Startwert für den maximalen Füllwert beim Start der Downloadsitzung zu verwenden und dann den maximalen Füllwert während der Mediendownloadsitzung auf Grundlage von zumindest einem von Folgenden zu erhöhen:
- einem Inhaltstyp;
- Betrachten oder Hören von Statistiken, die für einen bestimmten Medienclip gesammelt wurden;
- Benutzerbeurteilungen eines Medienclips;
- eine Länge eines Medienclips;
- Benutzerkontext oder abgeleitete Stimmung des Benutzers;
- Laden.

6. Mobile Telekommunikationsvorrichtung (22) nach Anspruch 1, wobei das Verhältnis ρₜₕ eine Funktion der angeforderten Medienrate ist.

7. Verfahren zum Betreiben einer mobilen Kommunikationsvorrichtung (22), wobei das Verfahren umfasst, dass die mobile Kommunikationsvorrichtung die folgenden Schritte durchführt:
- Empfangen von Inhaltsdaten über ein Mobiltelekommunikationsnetz;
- Halten von heruntergeladenen, aber noch nicht gespielten Inhaltsdaten in einem Abspielzwischenspeicher (41);
- Lesen von Inhaltsdaten mit einer Medienrate aus dem Abspielzwischenspeicher (41) und Senden von Inhalt an eine Anzeige oder einen Lautsprecher zur Wiedergabe;
- Überprüfen eines Füllstandes des Abspielzwischenspeichers (41), ständig oder zumindest am Ende eines Mediensegmentdownloads;
- Schätzen eines aktuellen Durchsatzes;
- Auswählen einer angeforderten Medienrate für ein nächstes angefordertes Mediensegment aus einer Vielzahl von möglichen Medienraten;
und
- Umschalten zwischen einem Zustand des ständigen Anforderns von neuen Inhaltssegmenten und einem Zustand des Nichtanforderns von Segmenten abhängig von dem Füllstand,
wobei der Schritt des Auswählens ferner die Schritte des Berechnens eines Verhältnisses p zwischen dem aktuellen Durchsatz und der angeforderten Medienrate umfasst, wobei eine Medienrate höher als ein vordefinierter Haltemarken-Medienratenstand (R3) nur dann als eine angeforderte Medienrate für ein nächstes angefordertes Mediensegment ausgewählt wird, wenn das Verhältnis p über einem vordefinierten Verhältnis ρₜₕ ist, wobei ρₜₕ > 1 ist.

8. Netzknoten (60) für ein Telekommunikationsnetz, wobei der Netzknoten Folgendes umfasst:
- einen Modifizierer (72) der manifesten Datei, der dazu konfiguriert ist, eine manifeste Datei so zu modifizieren, dass eine mobile Vorrichtung gezwungen ist, ein relativ großes Segment anzufordern;
- ein Clientaufforderungs-Parsermodul (64), das dazu konfiguriert ist, eine Aufforderung für ein Mediensegment oder eine Medienrate von der Vorrichtung zu empfangen;
- eine Segmentformatier- und -abrufeinrichtung (70), die dazu konfiguriert ist, Originalmediensegmente von einem Fernserver oder einem lokalen Datenspeicher (71) abzurufen und die Mediensegmente in ein größeres Segment umzuformatieren; und
- eine Inhaltsdatenlieferfunktion (61), die dazu konfiguriert ist, das größere Segment an die mobile Vorrichtung zu übertragen,
wobei der Netzknoten (60) ferner Folgendes umfasst:
- einen Durchsatzschätzer (63), der dazu konfiguriert ist, einen aktuellen Durchsatz zu schätzen, und
- einen Medienratenentscheider (66), der dazu konfiguriert ist, ein Verhältnis p zwischen dem aktuellen Durchsatz und der angeforderten Medienrate zu berechnen und die Segmentformatier- und -abrufeinrichtung (70) anzuweisen, eine Medienrate höher als ein vordefinierter Haltemarken-Medienratenstand nur dann anzufordern, wenn das Verhältnis p über einem vordefinierten Verhältnis ρₜₕ ist, wobei ρₜₕ > 1 ist.

9. Netzknoten (60) nach Anspruch 8, wobei der Netzknoten ferner umfasst:
- einen Speicher (67) zum Speichern einer manifesten Datendatei, die Informationen über mögliche Medienraten umfasst;
- eine Funktion (68) für erfolglose Antwort zum Senden einer Ablehnungsantwort an die mobile Kommunikationsvorrichtung wenn die angeforderte Medienrate nicht akzeptiert wurde.

10. Netzknoten (60) nach Anspruch 8 oder 9, wobei der Durchsatzschätzer (63) den aktuellen Durchsatz auf Grundlage einer Rückmeldung von der Inhaltsdatenlieferfunktion (61) schätzt.

11. Netzknoten (60) nach Anspruch 8 oder 9, wobei der Durchsatzschätzer (63) den aktuellen Durchsatz auf Grundlage der Downloadzeit des letzten Mediensegments oder einer Rate der empfangenen TCP-ACK für die Segmente von der Inhaltsdatenlieferfunktion (61) schätzt.

12. Netzknoten (60) nach Anspruch 8 oder 9, wobei der Durchsatzschätzer (63) den aktuellen Durchsatz auf Grundlage eines empfangenen verfügbaren Durchsatzes (65) des Netzes schätzt.

13. Verfahren zum Betreiben eines Netzknotens (60) in einem Telekommunikationsnetz, wobei das Verfahren umfasst, dass der Netzknoten die folgenden Schritte durchführt:
- Liefern einer manifesten Datei an eine mobile Vorrichtung, wobei die manifeste Datei modifiziert wird, um größere Mediensegmente als im Originalformat darzustellen;
- Empfangen einer Aufforderung für ein Mediensegment von der mobilen Vorrichtung;
- Abrufen von Originalmediensegmenten von einem Fernserver oder einem lokalen Datenspeicher (71) durch eine Segmentformatier- und -abrufeinrichtung (70);
- Umformatieren der Mediensegmente in ein größeres Segment durch eine Segmentformatier- und -abrufeinrichtung (70);
- Übertragen des größeren Mediensegments an die mobile Vorrichtung;
- Schätzen eines aktuellen Durchsatzes; und
- Berechnen eines Verhältnisses p zwischen dem aktuellen Durchsatz und einer angeforderten Medienrate und Anweisen der Segmentformatier- und -abrufeinrichtung (70), eine Medienrate höher als ein vordefinierter Haltemarken-Medienratenstand nur dann anzufordern, wenn das Verhältnis p über einem vordefinierten Verhältnis ρₜₕ ist, wobei ρₜₕ > 1 ist.

14. Verfahren nach Anspruch 13, wobei der Schritt des Berechnens auf einer Umschaltrichtlinie (59) für empfangene Medienrate basiert.

15. Verfahren nach Anspruch 13, wobei der Schritt des Berechnens auf verfügbaren Medienbitraten der manifesten Datei basiert.

## Revendications

1. Dispositif de télécommunication mobile (22) comprenant :
- un récepteur (40) pour recevoir des données de contenu via un réseau de télécommunication mobile ;
- une mémoire tampon de sortie de lecture (41) pour retenir des données de contenu téléchargées mais encore non lues ;
- un lecteur multimédia (42) pour lire des données de contenu à une vitesse multimédia depuis la mémoire tampon de sortie de lecture et pour envoyer un contenu à un écran ou à un haut-parleur aux fins de rendu ;
- un contrôleur de demande de segment (46) pour envoyer des demandes de nouveaux segments de contenu à un serveur distant ;
- un surveilleur de remplissage de mémoire tampon (45) pour vérifier un niveau de remplissage de ladite mémoire tampon de sortie de lecture ;
- un estimateur de débit (48) pour estimer un débit actuel ; et
- un sélecteur de vitesse multimédia (49) pour sélectionner, parmi une pluralité de possibles vitesses multimédias, une vitesse multimédia demandée pour un prochain segment multimédia demandé,
dans lequel le contrôleur de demande de segment (46) est configuré pour commuter entre un état de demande continue de segments de contenu et un état de non-demande de segments de contenu en fonction dudit niveau de remplissage, et
dans lequel ledit sélecteur de vitesse multimédia (49) est configuré pour calculer un rapport p entre ledit débit actuel et ladite vitesse multimédia demandée, et pour ordonner audit contrôleur de demande de segment (46) de demander une vitesse multimédia plus élevée qu'un niveau de vitesse multimédia de coupure prédéfini (R3) uniquement si ledit rapport p est au-dessus d'un rapport prédéfini ρₜₕ, où ρₜₕ > 1.

2. Dispositif de télécommunication mobile (22) selon la revendication 1, dans lequel le contrôleur de demande de segment (46) commute à l'état de demande continue de nouveaux segments de contenu lorsque ledit niveau de remplissage est en dessous d'une valeur de remplissage minimale, et commute à l'état de non-demande de segments de contenu lorsque le niveau de remplissage de la mémoire tampon de sortie de lecture est au-dessus d'une valeur de remplissage maximale.

3. Dispositif de télécommunication mobile (22) selon l'une quelconque des revendications précédentes, dans lequel la valeur de remplissage minimale et la valeur de remplissage maximale sont localement configurées dans le dispositif de télécommunication mobile ou reçues d'un serveur distant via ledit réseau de télécommunication mobile.

4. Dispositif de télécommunication mobile (22) selon l'une quelconque des revendications précédentes, dans lequel le dispositif comprend :
- une mémoire (50) pour stocker un fichier de données de manifeste comprenant des informations sur lesdites possibles vitesses multimédias.

5. Dispositif de télécommunication mobile (22) selon l'une quelconque des revendications précédentes, dans lequel ledit surveilleur de remplissage de mémoire tampon (45) est configuré pour utiliser une faible valeur de début prédéfinie pour ladite valeur de remplissage maximale au début de ladite session de téléchargement, et ensuite pour augmenter ladite valeur de remplissage maximale durant la session de téléchargement multimédia, sur la base d'au moins un parmi :
- un type de contenu ;
- visualisation ou écoute de statistiques collectées pour un clip multimédia spécifique ;
- notations d'utilisateur d'un clip multimédia ;
- une longueur d'un clip multimédia ;
- contexte d'utilisateur ou humeur présumée de l'utilisateur ;
- chargement.

6. Dispositif de télécommunication mobile (22) selon la revendication 1, dans lequel le rapport ρₜₕ est une fonction de la vitesse multimédia demandée.

7. Procédé de fonctionnement d'un dispositif de communication mobile (22), ledit procédé comprenant ledit dispositif de communication mobile réalisant les étapes de :
- réception de données de contenu via un réseau de télécommunication mobile ;
- retenue dans une mémoire tampon de sortie de lecture (41) de données de contenu téléchargées mais encore non lues ;
- lecture de données de contenu à une vitesse multimédia depuis la mémoire tampon de sortie de lecture (41) et envoi du contenu à un écran ou un haut-parleur aux fins de rendu ;
- vérification d'un niveau de remplissage de ladite mémoire tampon de sortie de lecture (41), continuellement ou au moins à la fin d'un téléchargement de segment multimédia ;
- estimation d'un débit actuel ;
- sélection, parmi une pluralité de possibles vitesses multimédias, d'une vitesse multimédia demandée pour un prochain segment multimédia demandé ; et
- commutation entre un état de demande continue de nouveaux segments de contenu et un état de non-demande de segments en fonction dudit niveau de remplissage,
dans lequel l'étape de sélection comprend en outre les étapes de calcul d'un rapport p entre ledit débit actuel et ladite vitesse multimédia demandée, dans lequel une vitesse multimédia plus élevée qu'un niveau de vitesse multimédia de coupure prédéfini (R3) est sélectionné uniquement en tant que vitesse multimédia demandée pour un prochain segment multimédia demandé si ledit rapport p est au-dessus d'un rapport prédéfini ρₜₕ, où ρₜₕ > 1.

8. Noeud de réseau (60) pour un réseau de télécommunication, ledit noeud de réseau comprenant :
- un modificateur de fichier de manifeste (72) configuré pour modifier un fichier de manifeste de sorte à forcer un dispositif mobile à demander un segment relativement grand ;
- un module d'analyse de demande de client (64) configuré pour recevoir une demande d'un segment multimédia ou d'une vitesse multimédia en provenance dudit dispositif ;
- un formateur et récupérateur de segment (70) configuré pour récupérer des segments multimédias originaux auprès d'un serveur distant ou d'un dispositif de stockage local (71), et pour reformater les segments multimédias en un segment plus grand ; et
- une fonction de distribution de données de contenu (61) configurée pour transférer le segment plus grand au dispositif mobile, le noeud de réseau (60) comprenant en outre :
- un estimateur de débit (63) configuré pour estimer un débit actuel, et
- un décideur de vitesse multimédia (66) configuré pour calculer un rapport p entre ledit débit actuel et ladite vitesse multimédia demandée, et ordonner audit formateur et récupérateur de segment (70) de demander une vitesse multimédia plus élevée qu'un niveau de vitesse multimédia de coupure prédéfini uniquement si ledit rapport p est au-dessus d'un rapport prédéfini ρₜₕ, où ρₜₕ > 1.

9. Noeud de réseau (60) selon la revendication 8, dans lequel ledit noeud de réseau comprend en outre :
- une mémoire (67) pour stocker un fichier de données de manifeste comprenant des informations sur de possibles vitesses multimédias ;
- une fonction de réponse d'insuccès (68) pour envoyer une réponse de refus au dispositif de communication mobile si ladite vitesse multimédia demandée n'était pas acceptée.

10. Noeud de réseau (60) selon la revendication 8 ou 9, dans lequel ledit estimateur de débit (63) estime le débit actuel sur la base d'une information en retour en provenance de la fonction de distribution de données de contenu (61).

11. Noeud de réseau (60) selon la revendication 8 ou 9, dans lequel ledit estimateur de débit (63) estime le débit actuel sur la base du temps de téléchargement du dernier segment multimédia ou d'une vitesse d'ACK TCP reçus pour les segments, en provenance de la fonction de distribution de données de contenu (61).

12. Noeud de réseau (60) selon la revendication 8 ou 9, dans lequel ledit estimateur de débit (63) estime le débit actuel sur la base du débit reçu disponible (65) dudit réseau.

13. Procédé de fonctionnement d'un noeud de réseau (60) dans un réseau de télécommunication, ledit procédé comprenant ledit noeud de réseau réalisant les étapes de :
- distribution d'un fichier de manifeste à un dispositif mobile, ledit fichier de manifeste étant modifié pour présenter des segments multimédias plus grands que dans un format original ;
- réception d'une demande pour un segment multimédia en provenance dudit dispositif mobile ;
- récupération, par un formateur et récupérateur de segment (70), de segments multimédias originaux en provenance d'un serveur distant ou d'un dispositif de stockage local (71) ;
- reformatage, par le formateur et récupérateur de segment (70), desdits segments multimédias en un segment plus grand ;
- transfert dudit segment multimédia plus grand au dispositif mobile ;
- estimation d'un débit actuel ; et
- calcul d'un rapport p entre ledit débit actuel et une vitesse multimédia demandée, et ordre au formateur et récupérateur de segment (70) de demander une vitesse multimédia plus élevée qu'un niveau de vitesse multimédia de coupure prédéfini uniquement si ledit rapport p est au-dessus d'un rapport prédéfini ρₜₕ, où ρₜₕ > 1.

14. Procédé selon la revendication 13, dans lequel l'étape de calcul est basée sur une politique de commutation de vitesse multimédia reçue (59).

15. Procédé selon la revendication 13, dans lequel l'étape de calcul est basée sur des vitesses binaires multimédias disponibles dans le fichier de manifeste.
